# EUROPEAN PATENT APPLICATION

(11) **EP 2 835 781 A1**
(43) Date of publication of application: **11.02.2015**
(21) Application number: 13290187.7
(22) Date of filing: 05.08.2013
(51) Int. Cl.: G06Q 50/14, G06Q 10/02, G06Q 10/08

(54) **Journey data re-evaluation**

(71) Applicant: Amadeus S.A.S., 06410 Biot (FR)
(72) Inventor: Cornelius, Veronica, 06000 Nice (FR); Jaffredo, Gregoire, 44100 Nantes (FR)
(74) Representative: Samson & Partner

(57) **Abstract**

Methods, systems, and computer program products for processing a transaction request associated with a travel record, where the travel record includes at least one previously-booked segment. The transaction request may be received at an inventory system, where the transaction request identifies at least one requested segment for the travel record. The inventory system analyzes the at least one previously-booked segment of the travel record and the at least one requested segment of the transaction request to identify at least one particular previously-booked segment as a candidate for re-evaluation segment based at least in part on whether the at least one particular previously-booked segment and the at least one requested segment correspond to a particular journey. Availability may be computed for the at least one requested segment and the at least one candidate for re-evaluation segment, and a sell decision may be generated based at least partially on the computed availability.

## Description

### BACKGROUND

The invention is generally related to computers and computer software, and in particular to methods, systems, and computer program products for re-evaluating travel related data.

Computer technology is increasingly used in the travel industry to manage and support travel reservations, as well as data associated therewith. In particular, third party reservation agents, such as travel agents, often utilize computer based reservation terminals to interface with a travel reservation system, such as a Global Distribution System (GDS), to book travel arrangements for a customer. When reserving travel related services using such reservation terminals in communication with such travel reservation systems, a travel agent may initiate a reservation session between a reservation terminal and the travel reservation system to book one or more travel inventory items associated with travel related services (e.g., flights, hotels, rail transportation, dining reservations, etc.) for a customer during the reservation session. However, in some conventional travel reservation systems, interfacing with the travel reservation systems using a reservation terminal may be inflexible when booking one or more travel related services, and may require a travel agent to repeat actions when booking travel related services and/or modifying a booking.

Therefore, as travel related service booking becomes increasingly computerized, a continuing need exists in the art for improved computer based travel reservation systems, as well as methods and computer program products, for facilitating travel related service booking.

### BRIEF SUMMARY

Embodiments of the invention generally comprise a method, system, and computer program product for processing a transaction request associated with a travel record that includes one or more previously-booked segments. A transaction request that identifies one or more requested segments may be received at an inventory system. A processor of the inventory system may analyze the one or more requested segments and the travel record to identify at least one particular previously-booked segment of the travel record as a candidate for re-evaluation segment, where such identification may be based at least in part on whether the at least one particular previously-booked segment and the requested segment correspond to a particular journey. An availability of the particular journey may be computed by computing an availability for the requested segment and an updated availability for the at least one candidate for re-evaluation segment. A sell decision may be generated based at least in part on the computed availability for the particular journey, and the travel record may be updated based at least in part on the computed availability for the particular journey.

### BRIEF DESCRIPTION OF THE SEVERAL VIEWS OF THE DRA WINGS

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram of one or more reservation systems, inventory systems, and travel reservation devices consistent with embodiments of the invention.

FIG. 2A is a block diagram of an inventory system of FIG. 1.

FIG. 2B is a block diagram of a reservation system of FIG. 1.

FIG. 3 is a block diagram of a travel reservation device of FIG. 1.

FIG. 4 is a flowchart illustrating a sequence of operations that may be performed by the inventory system of FIG. 2 to re-evaluate one or more bookings of a travel record.

FIG. 5 is a flowchart illustrating a sequence of operations that may be performed by the inventory system of FIG. 2 to identify one or more previously-booked segments of a travel record as candidate for re-evaluation segments.

FIG. 6 is a flowchart illustrating a sequence of operations that may be performed by the inventory system of FIG. 2 to determine whether to update a booking status in a travel record associated with a candidate for re-evaluation segment.

FIG. 7A is a diagrammatic illustration that provides an example processing of a transaction request by the inventory system of FIG. 2 consistent with embodiments of the invention.

FIG. 7B is a diagrammatic illustration that provides an example processing of a sell decision corresponding to the transaction request of FIG. 7A by the inventory system of FIG. 2 consistent with embodiments of the invention.

FIG. 7C is a diagrammatic illustration that provides an example processing of a sell decision corresponding to the transaction request of FIG. 7A by the inventory system of FIG. 2 consistent with embodiments of the invention.

FIG. 8A is a diagrammatic illustration that provides an example processing of a transaction request by the inventory system of FIG. 2 consistent with embodiments of the invention.

FIG. 8B is a diagrammatic illustration that provides an example processing of a sell decision corresponding to the transaction request of FIG. 8A by the inventory system of FIG. 2 consistent with embodiments of the invention.

FIG. 9A is a diagrammatic illustration that provides an example processing of a transaction request by the inventory system of FIG. 2 consistent with embodiments of the invention.

FIG. 9B is a diagrammatic illustration that provides an example processing of a sell decision corresponding to the transaction request of FIG. 9A by the inventory system of FIG. 2 consistent with embodiments of the invention.

### DETAILED DESCRIPTION

Embodiments of the invention provide a system, method, and computer program product for re-evaluating availability for one or more previously-booked segments of a travel record based at least in part on a requested segment received in a transaction request associated with the travel record. In general, a segment may refer to a segment of travel for a travel item, such as a flight between an origin and destination. In the travel reservation industry, a segment may refer to a travel item that is a part of a journey. For example, if a travel itinerary for a passenger includes air travel from Atlanta, Georgia (International Air Transport Association airport code, ATL) to New York (JFK) with an intermediate stop in Charlotte, North Carolina (CLT), a travel record for the passenger may include a first booked segment for ATL to CLT and a second booked segment for CLT to JFK. In many scenarios, availability for segments and journeys may be different. Returning to example provided above, availability for the first segment (ATL-CLT), the second segment (CLT-JFK), and the entire journey (ATL-CLT-JFK) may be different for the corresponding travel items. For example, a travel provider may reserve space for the first segment (ATL-CLT) and the second segment (CLT-JFK) for passengers desiring to book both segments together (i.e., the journey). In general, the first segment (ATL-CLT) and second segment (CLT-JFK) may be described as corresponding to a particular journey - where the journey generally refers to the origin and destination of all the segments of the journey (ATL-JFK).

In general, travel reservations may be made for a passenger by a travel agent, where the travel agent interfaces with a reservation system via a travel reservation device, such as a personal computer. In turn, the reservation system interfaces with one or more inventory systems to determine availability for travel inventory items and book available travel inventory items for the passenger. Particularly, a travel agent may interface with a reservation system to book one or more segments for one or more travel items. When interfacing with some reservation systems, the travel agent may book segments that correspond to a particular journey in different transaction requests and/or at different times, which may lead to the inventory system evaluating transaction requests to determine availability based on the availability of each segment rather than the availability of each segment in the context of the journey. As mentioned, availability for segments of a journey may differ from availability for each segment individually. Moreover, in some reservation systems and/or inventory systems, after booking a segment, a travel agent may not be able to modify and/or re-evaluate the booking. Therefore, some reservation systems may deny and/or waitlist one or more segments based on the availability of the one or more segments individually, even though the one or more segments correspond to a particular journey for which travel inventory items may be available.

Consistent with some embodiments of the invention, an availability of one or more previously-booked segments of a travel record may be re-evaluated in response to a transaction request including a requested segment that corresponds to a particular journey with at least one of the previously-booked segments. Furthermore, consistent with embodiments of the invention, the availability of a requested segment that corresponds to a particular journey with at least one or more previously-booked segments may be evaluated based on availability associated with the particular journey even if more than one reservation session is used to book the segments corresponding to the particular journey. Therefore, in some embodiments of the invention, a booking for each of one or more previously-booked segments may be updated/modified when one or more subsequent travel requests include one or more requested segments that correspond to the same journey as the previously-booked segments of a travel record. Embodiments of the invention may identify one or more previously-booked segments that correspond to a journey with a requested segment, where each identified previously-booked segment may be identified as a candidate for re-evaluation segment. In such embodiments, a booking status for each candidate for re-evaluation segment may be modified and/or updated dynamically concurrent with booking each requested segment.

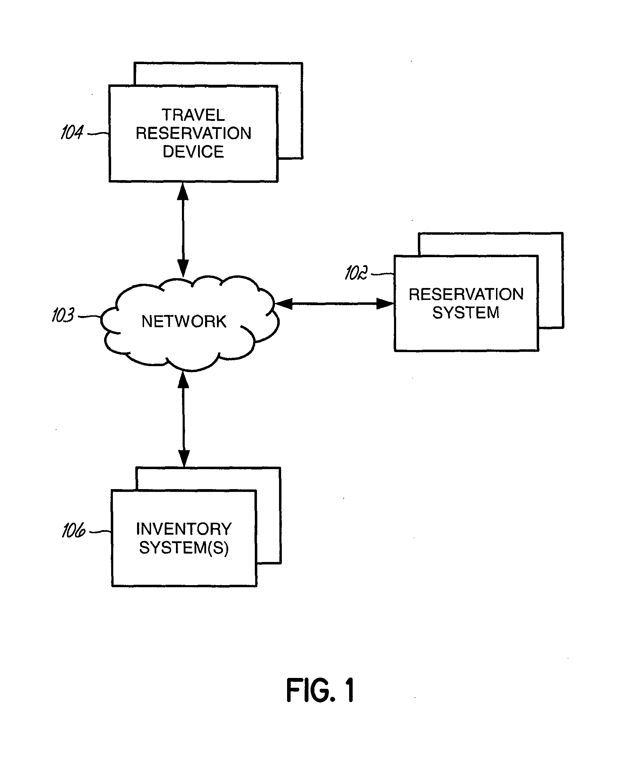

Turning now to the figures and particularly to FIG. 1, this figure provides a block diagram illustrating the one or more devices and/or systems consistent with embodiments of the invention. As shown in FIG. 1, a reservation system 102 may be implemented as one or more servers. The reservation system 102 may be connected to a communication network 103, where the communication network 103 may comprise the Internet, a local area network (LAN), a wide area network (WAN), a cellular voice/data network, one or more high speed bus connections, and/or other such types of communication networks. A travel reservation device 104 may be connected to the communication network 103, such that a reservation agent (e.g., travel agency or other such travel reservation service) may initialize a reservation session with the reservation system 102 to communicate a booking request and/or other such relevant data to the reservation system 102. The travel reservation device 104 may be a personal computing device, tablet computer, thin client terminal, smart phone and/or other such computing device.

One or more servers for one or more inventory systems 106 of one or more travel merchants are connected to the communication network 103. The reservation system 102 may initialize an inventory session over the communication network 103 with each inventory system 106 for which a travel inventory item is to be booked. Consistent with embodiments of the invention, a reservation agent may interface with the reservation system 102 using the travel reservation device 104 in a reservation session to provide data for a booking request. In turn, the reservation system interfaces with each inventory system 106 of each travel merchant that provides a travel inventory item needed for the booking request in an inventory session. Moreover, while the reservation system 102 and inventory system 106 are described herein as separate entities, the invention is not so limited. In some embodiments, various hardware, software components, and/or sequences of operations described with respect to the reservation system 102 or inventory system 106 may be implemented on either the reservation system 102 and/or inventory system 106. Furthermore, as will be appreciated, in some embodiments the reservation system 102 and/or inventory system may be components of a GDS.

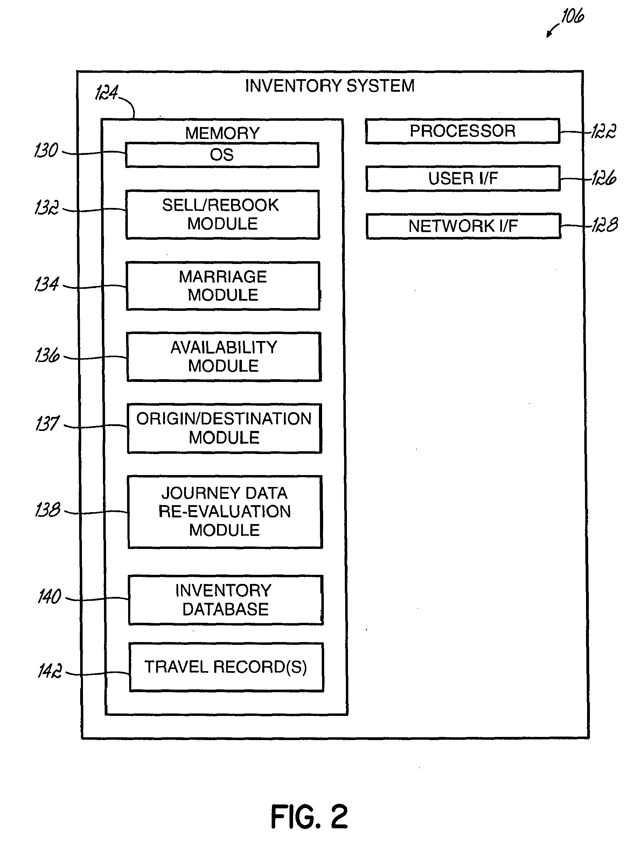

Referring to FIG. 2A, this figure provides a block diagram that illustrates components of an inventory system 106 consistent with some embodiments of the invention. FIG. 2A provides a block diagram that illustrates the components of the one or more servers of an inventory system 106 consistent with embodiments of the invention. The inventory system 106 includes at least one processor 122 including at least one hardware-based microprocessor and a memory 124 coupled to the at least one processor 122. The memory 124 may represent the random access memory (RAM) devices comprising the main storage of inventory system 106, as well as any supplemental levels of memory, e.g., cache memories, non-volatile or backup memories (e.g., programmable or flash memories), read-only memories, etc. In addition, memory 124 may be considered to include memory storage physically located elsewhere in the inventory system 106, e.g., any cache memory in a microprocessor, as well as any storage capacity used as a virtual memory, e.g., as stored on a mass storage device or on another computer coupled to the inventory system 106 via the communication network 103, such as a memory of the reservation system 102.

For interface with a user or operator, the inventory system 106 may include a user interface 126 incorporating one or more user input/output devices, e.g., a keyboard, a pointing device, a display, a printer, etc. Otherwise, input may be retrieved via another computer or terminal (e.g., the travel reservation device 104 and/or the reservation system 102) over a network interface 128 coupled to the communication network 103. The inventory system 106 also may be in communication with one or more mass storage devices, which may be, for example, internal hard disk storage devices, external hard disk storage devices, external databases, storage area network devices, etc.

The inventory system 106 typically operates under the control of an operating system 130 and executes or otherwise relies upon various computer software applications, components, programs, objects, modules, data structures, etc., including for example, a sell/rebook module 132, a marriage module 134, an availability module 136, an origin/destination module 137, and/or a journey data re-evaluation module 138. Furthermore, the memory 124 of the inventory system 106 may generally store one or more databases including for example, an inventory database 140 and/or data corresponding to one or more travel records 142. Each database 140 may include data and supporting data structures that store and organize the data. In particular, each database 140 may be arranged with any database organization and/or structure including, but not limited to, a relational database, a hierarchical database, a network database, and/or combinations thereof. A database management system in the form of a computer software application executing as instructions on a processing unit of the inventory system 106 is used to access the information or data stored in records of the databases 140 in response to a query. The inventory database 140 generally stores inventory data corresponding to travel inventory items of a travel merchant that the inventory system 106 is configured to manage. The inventory data that may be stored in the inventory database 140, may include available travel inventory items, uncommitted booked travel inventory items, committed booked travel inventory items, a load factor for a group/type of travel inventory items (e.g., the number of booked seats on a flight-date for a cabin compared to the total number of seats on the flight-date for the cabin), time to departure for each type of travel inventory item, and/or other such information.

Consistent with embodiments of the invention the modules 132-138 and/or other such modules/applications may be executing on the inventory system 106, and the modules 132-138 may cause the processor 122 to perform operations consistent with embodiments of the invention. The sell/rebook module 132 may be configured to analyze a received transaction request, and determine a travel inventory item for the transaction request by communicating with the origin/destination module 137, the marriage module 134, and/or the availability module 136. The origin/destination module 137 computes the itinerary of each passenger based on the content of each transaction request received by the sell/rebook module 132. The marriage module 134 applies protection logic to flight-date segments that have been determined to be an origin and destination (i.e., O&D) by the origin/destination module 137. The availability module 136 may query the inventory database 140 to determine travel inventory item availability. In general, the availability module 136 may calculate travel inventory item availability based at least in part on data stored in the inventory database 140. Consistent with embodiments of the invention, the journey data re-evaluation module may analyze one or more previously-booked segments of a travel record as well as one or more requested segments of the transaction request to determine whether a different availability status may be booked for any of the previously-booked segments and/or any of the requested segments based on whether any of the previously-booked segments and any of the requested segments correspond to a particular journey.

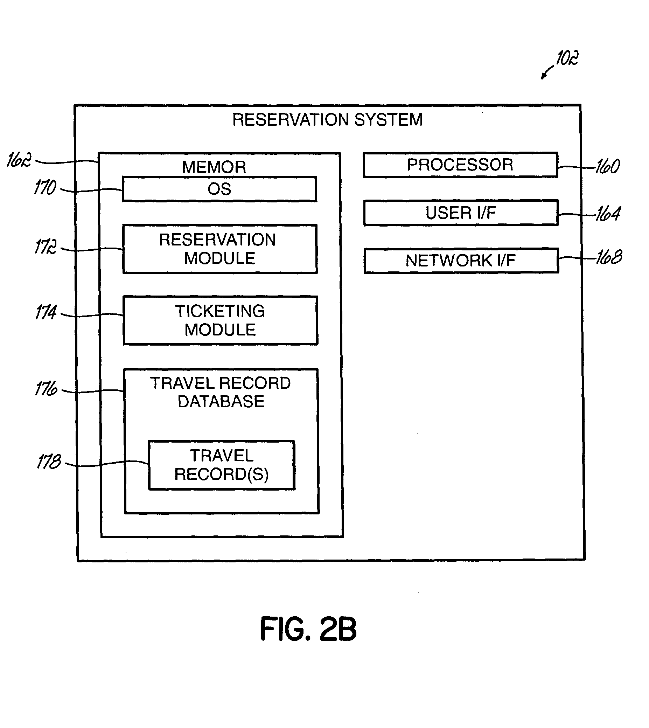

FIG. 2B provides a block diagram that illustrates the components of the one or more servers of the reservation system 102. The reservation system 102 includes at least one processor 160 including at least one hardware-based microprocessor and a memory 162 coupled to the at least one processor 160. The memory 162 may represent the random access memory (RAM) devices comprising the main storage of reservation system 102, as well as any supplemental levels of memory, e.g., cache memories, non-volatile or backup memories (e.g., programmable or flash memories), read-only memories, etc. In addition, memory 162 may be considered to include memory storage physically located elsewhere in the reservation system 102, e.g., any cache memory in a microprocessor, as well as any storage capacity used as a virtual memory, e.g., as stored on a mass storage device or on another computer coupled to the reservation system 102.

For interface with a user or operator, the reservation system 102 may include a user interface 164 incorporating one or more user input/output devices, e.g., a keyboard, a pointing device, a display, a printer, etc. Otherwise, input may be received via another computer or terminal (e.g., the inventory system 106, the travel reservation device 104) over a network interface 168 coupled to the communication network 103. The reservation system 102 also may be in communication with one or more mass storage devices, which may be, for example, internal hard disk storage devices, external hard disk storage devices, external databases, storage area network devices, etc.

The reservation system 102 typically operates under the control of an operating system 170 and executes or otherwise relies upon various computer software applications, components, programs, objects, modules, data structures, etc., including for example, a reservation module 172 and a ticketing module 174. In general, the reservation module 172 may be configured to generate a reserved travel booking based on received booking data. The ticketing module 174 may be generally configured to issue a travel ticket for a reserved travel booking. Moreover, various applications, components, programs, objects, modules, etc. may also execute on one or more processors in another computer coupled to the reservation system 102 via the communication network 103, e.g., in a distributed or client-server computing environment, whereby the processing required to implement the functions of a computer program may be allocated to multiple computers over a network. For example, some of the functionality described herein as being incorporated into a travel and reservation system 102 may be implemented in one or more servers.

Moreover, the memory 162 may generally store one or more data structures including for example a travel record database 176. The travel record database 176 may store collected data for booking transactions in travel records 178, where the collected data may be organized by passenger, reservation agent, reservation session, and/or other such parameters. In general, the collected data of a travel record may include one or more bookings for travel items for a particular passenger/customer. For example, a travel record may include a booking for one or more flights for the passenger. In some embodiments a travel record 178 may comprise a passenger name record associated with the passenger.

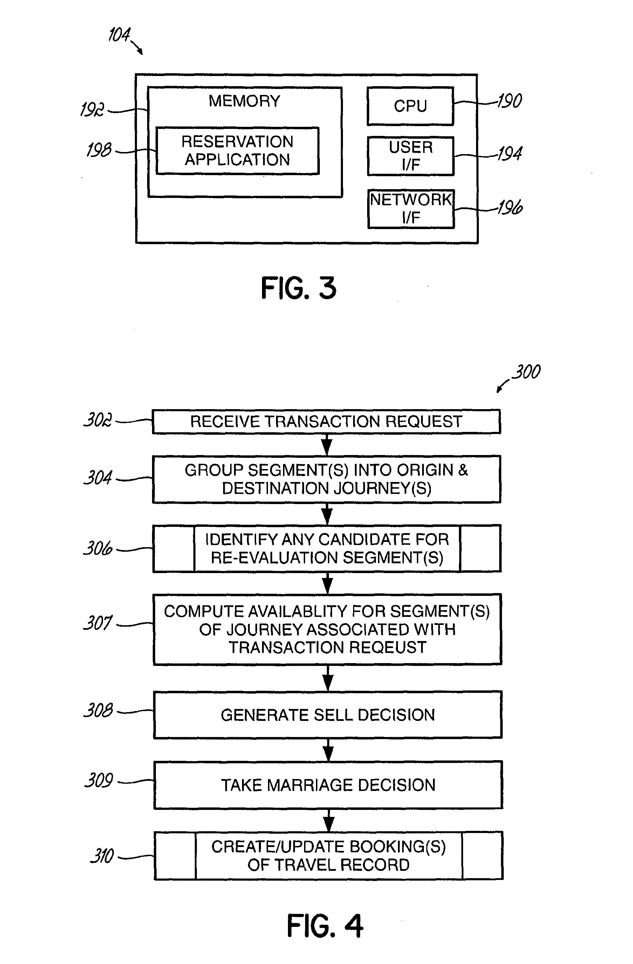

Turning now to FIG. 3, this figure provides a block diagram that illustrates components of a travel reservation device 104 consistent with some embodiments of the invention. As discussed previously, a travel reservation device 104 may be a personal computer, thin client terminal, tablet computer, and/or other such computing devices. In general, the travel reservation device may comprise at least one processor 190 coupled to a memory 192. For interface with a user or operator, the travel reservation device 104 may include a user interface 194 incorporating one or more user input/output devices, e.g., a keyboard, a pointing device, a display, a printer, etc. In addition, the travel reservation device 104 may include a network interface 196 configured to communicate data to and from the communication network 103.

The travel reservation device 104 typically operates under the control of an operating system and/or application and executes or otherwise relies upon various computer software applications, components, programs, objects, modules, data structures, etc., including for example, a reservation application 198. The reservation application 198 may be executed by the processor 190 of the travel reservation device 104 to interface with an operator (e.g., a travel agent) via the user interface 194 such that booking data may be input for reserving a travel booking. The reservation application 198 may cause the input booking data to be communicated to the reservation system 102 such that a travel booking may be reserved based on the booking data. In general, the reservation application 198 executes on the travel reservation device 104 to generate a front end through which a travel agent may interface with the reservation system 102, which in turn interfaces with one or more inventory systems 106 to reserve a travel booking for a travel customer during one or more booking sessions. For example, the travel reservation device 104 executing the reservation application 198 may operate as a remote terminal connected to reservation system 102, and a travel agent may reserve a travel booking for a travel customer by interfacing with the reservation system 102 using the travel reservation device 104. For example, the travel reservation device 104 executing the reservation application 198 may provide a command line interface (e.g., cryptic interface) to a global distribution system (GDS) embodied by the reservation system 102. In this example, the booking data communicated by the travel reservation device 104 may be in a travel agency format, such as cryptic.

FIG. 4 provides a flowchart 300 that illustrates a sequence of operations that may be performed by the inventory system 106 consistent with some embodiments of the invention to re-evaluate a booking status of previously-booked segments and/or requested segments for a particular passenger. As shown, the inventory system 106 may receive a transaction request for a travel record (block 302). The transaction request generally includes at least one requested segment for which a transaction is requested. Furthermore, the transaction request generally includes data corresponding to the travel record, where such data may include, for example data identifying a previously booked segment and a status of the previously booked segment. In general, the requested transaction may be a sell transaction, rebook transaction, and/or other such types of transactions. The inventory system 106 may analyze the travel record and the transaction request to group any previously-booked segments of the travel record and the at least one requested segments of the transaction request into one or more journeys based at least in part on an origin and destination associated with each segment (block 304). The inventory system 106 identifies any previously-booked segments as a candidate for re-evaluation segment (block 306). A previously-booked segment may be identified as a candidate for re-evaluation segment based at least in part on whether the previously-booked segment is grouped in a journey with at least one requested segment. For example, referring to the example segments provided above, if the first segment (ATL-CLT) was already booked for the travel record, and a transaction request for the travel record included the second segment (CLT-JFK), embodiments of the invention may group the first and second segments into a journey (ATL-CLT-JFK) and identify the first segment (ATL-CLT) as a candidate for re-evaluation.

The inventory system 106 may compute an availability for the at least one requested segment of the transaction request and an updated availability for each candidate for re-evaluation segment (block 307). Based at least in part on the computed availability for the requested segment and the computed updated availability for the at least one candidate for re-evaluation segment, the inventory system 106 may generate a sell decision for the at least one requested segment and the at least one candidate for re-evaluation segment (block 308). The inventory system 106 may make a marriage decision for the at least one requested segment and the at least one candidate for re-evaluation segment (block 309). Based on the computed availability of the journey, the reservation system 106 may update the travel record by updating and/or creating bookings for the at least one candidate for re-evaluation segment and the at least one requested segment (block 310). In general, the reservation system 102 may update the travel record to create a booking for each of the at least one requested segments based at least in part on the computed availability in the sell decision for the at least one requested segment. Furthermore, the reservation system 102 may update a booking of each candidate for re-evaluation segment based at least on part on the updated availability in the sell decision.

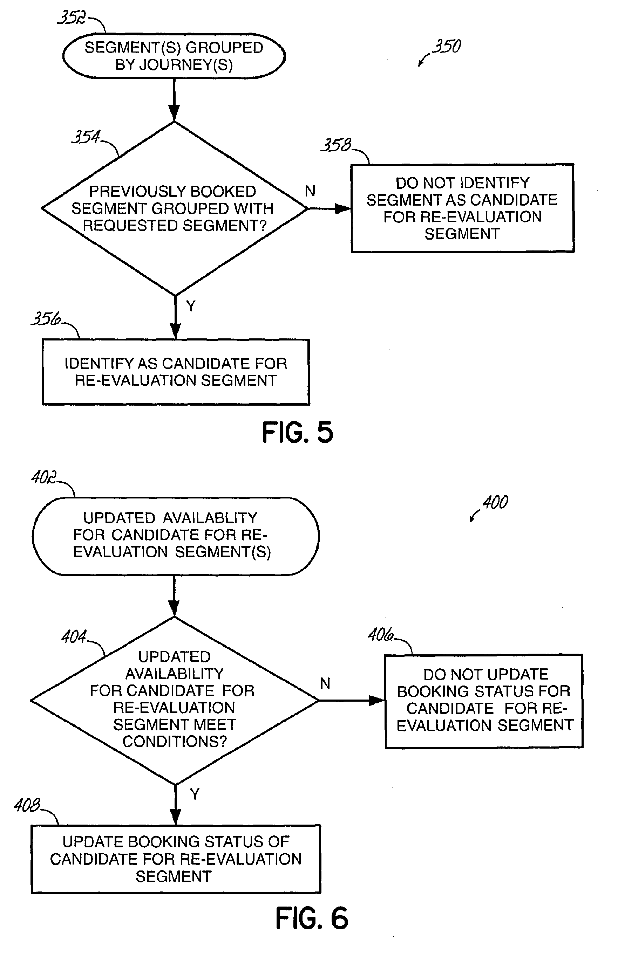

Turning now to FIG. 5, this figure provides flowchart 350 that illustrates a sequence of operations that may be performed by the inventory system 106 to identify one or more previously-booked segments of a travel record as a candidate for re-evaluation segment consistent with some embodiments of the invention. As provided above with respect to block 306 of FIG. 4, one or more requested segments of a transaction request for the travel record may be grouped with one or more previously-booked segments of the travel record into one or more journeys. The inventory system 106 may analyze the one or more journey groups, and for each previously-booked segment of the travel record the inventory system determines whether the previously-booked segment is grouped with a requested segment in a journey (block 354). In response to determining that the previously-booked segment is grouped in a journey with one or more requested segments ("Y" branch of block 354), the inventory system 106 may identify the previously-booked segment as a candidate for re-evaluation segment (block 356). In response to determining that the previously-booked segment is not grouped in a journey with a requested segment ("N" branch of block 354), the inventory system does not identify the previously-booked segment as a candidate for re-evaluation (block 358) and further processing (i.e., computing availability and updating booking status) is not performed for the previously-booked segment.

FIG. 6 provides a flowchart 400 that illustrates a sequence of operations that may be performed by the reservation system 102 to determine whether to update a booking status for a candidate for re-evaluation segment based at least in part on an updated availability computed for the candidate for re-evaluation segment consistent with embodiments of the invention and indicated in a sell decision received by the reservation system 102. As provided above with respect to block 308 of FIG. 4, an updated availability for each candidate for re-evaluation segment may be computed by the inventory system 106. For each candidate for re-evaluation segment, the inventory system may determine whether to update a booking status for the candidate for re-evaluation segment based at least in part on whether the computed updated availability meets re-evaluation conditions (block 404).

In response to determining that the updated availability for the candidate for re-evaluation segment does not meet the re-evaluation conditions ("N" branch of block 404), the inventory system may not update the booking status for the candidate for re-evaluation segment (block 406). In response to determining that the updated availability for the candidate for re-evaluation segment meets re-evaluation conditions ("Y" branch of block 404), the inventory system 106 may update the booking status of the candidate for re-evaluation segment based on the updated availability (block 408). In general, a previously-booked segment/candidate for re-evaluation segment may have a booking status of denied (UC), waitlisted (HL), or confirmed (HK). Consistent with embodiments of the invention, the booking status of a candidate for re-evaluation segment may be updated if an improved booking status may be booked based on the computed updated availability. Moreover, availability for a requested segment of the transaction request may be computed based on the journey and/or the availability of the individual requested segment. In some embodiments that determine availability based on origin/destination availability, the availability of the origin/destination is utilized in determining the availability of the requested segment.

For example, if a candidate for re-evaluation segment has a waitlisted booking status and the updated availability indicates that the booking status may be confirmed, the booking status of the candidate for re-evaluation segment may be updated from waitlisted to confirmed. Similarly, if a candidate for re-evaluation has a denied booking status and the updated availability indicates that the booking status may be updated to waitlisted, the booking status of the candidate for re-evaluation segment may be updated from denied to waitlisted. However, if the booking status for a candidate for re-evaluation segment is waitlisted and the updated availability indicates that the booking status may be updated to denied, the booking status of the candidate for re-evaluation segment may not be updated.

As illustrated by the previous examples, it will be appreciated that the booking status of previously-booked segments of a travel record may be re-evaluated such that a different availability associated with a journey may be realized for the previously-booked segments when a requested segment of a transaction request and such previously-booked segments correspond to a particular journey. Hence, the booking status of a previously-booked segment may be re-evaluated concurrent with booking a requested segment when the previously-booked segment and the requested segment are grouped in a journey. Moreover, the booking status of a previously-booked segment may be selectively updated if the booking status may be improved (e.g., canceled to waitlisted or confirmed, waitlisted to confirmed). Moreover, as illustrated, if the booking status cannot be improved, the booking status is not updated.

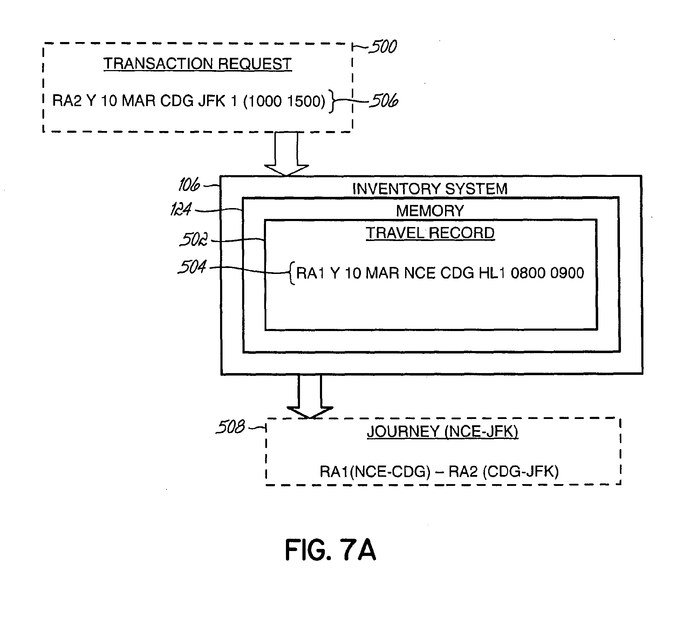

FIGS. 7A-C provide diagrammatic illustrations directed to processing an example transaction request 500 for an example travel record 502 by an inventory system 106 consistent with embodiments of the invention. Referring to FIG. 7A, the travel record 502 for a passenger includes a booking for a previously-booked segment 504 ('RA1 10 MAR NCE CDG HL1 0800 0900') where the previously-booked segment 504 (referred to for purposes of the example as 'RA1') is for a flight on March 10 from Nice, France (NCE) to Paris, France (CDG) and the booking status for the segment is waitlisted (HL). The example transaction request 500 includes a requested segment 506 ('RA2 Y 10 MAR CDG JFK 1 (1000 1500)'), where the requested segment 506 (referred to for purposes of the example as 'RA2') for a flight on March 10 from CDG to New York (JFK). As described above with respect to block 304 FIG. 4, embodiments of the invention may group previously-booked segments and requested segments by journey. In this example, the inventory system 106 may group the previously-booked segment RA1 504 and the requested segment RA2 506 as a journey 508. As discussed previously, embodiments of the invention group segments into journeys based at least in part on an origin and destination of the segments (NCE-JFK). As the example illustrates, the previously-booked segment RA1 502 includes NCE as the origin and CDG as a destination and the requested segment RA2 includes CDG as the origin and JFK as the destination, and the inventory system 106 may group the segments RA1, RA2 504, 506 into the journey 508 (NCE-JFK). Hence, the previously-booked segment RA1 may be identified as a candidate for re-evaluation segment because segment RA1 is grouped in the same journey as the requested segment RA2.

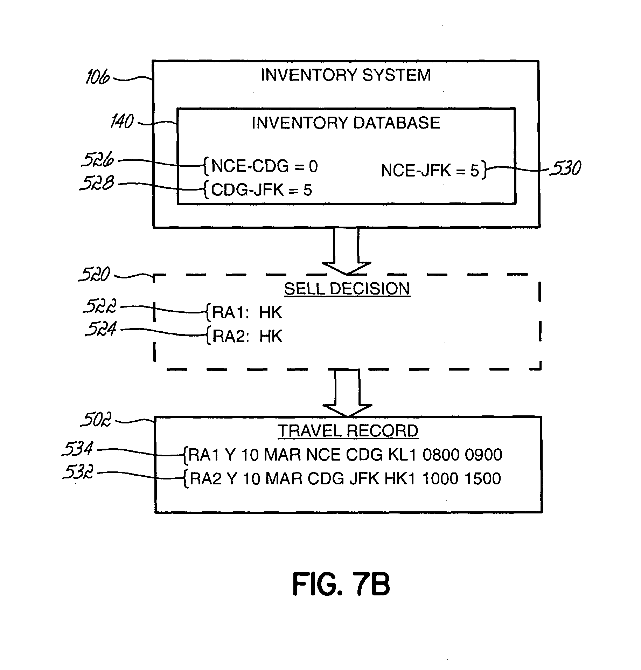

FIG. 7B illustrates an example sell decision 520 that indicates a booking status based on computed updated availability 522 for the previously-booked segment RA1 504 and a booking status based on computed availability 524 for the requested segment RA2 506 of FIG. 7A. In this example, the inventory database 140 of the inventory system 106 may be queried to compute availability. As shown, the inventory database 140 indicates availability for the NCE-CDE segment 526 is zero, there are five travel inventory items available for the CDG-JFK segment 528, and there are five travel inventory items available for the NCE-JFK journey 530. If an availability for the previously-booked segment RA1 (i.e., a NCE-CDG segment) was computed in some conventional reservation/inventory systems, the sell decision would indicate a booking status of waitlist (HL) or deny (UC). However, as shown in the example, because the booking status of the previously-booked segment RA1 is re-evaluated with the requested segment RA2, the updated availability for the previously-booked segment RA1 is based on the availability associated with the journey 530. Therefore, as shown, the updated availability 522 for the previously-booked segment RA1 indicates that an updated booking status is confirmed (HK), and the availability 524 for the requested segment RA2 indicates that the booking status is also confirmed (HK). Based on the availability for the requested segment RA2 and the updated availability for the previously-booked segment, the travel record 502 may be updated to include the booking for the requested segment RA2 532 and an updated booking status for the previously-booked segment RA1 534, where, as shown, the booking status for the previously-booked segment RA1 534 has been updated to a confirmed from waitlist status (KL1). Furthermore, in embodiments of the invention that perform marriage protection logic for flight segments determined to correspond to an origin and destination pair, upon confirmation of the previously-booked segment RA1 534 and the requested segment RA2 532, the segments 532, 534 may be married to thereby prevent cancellation of either segment 532, 534 individually thereafter.

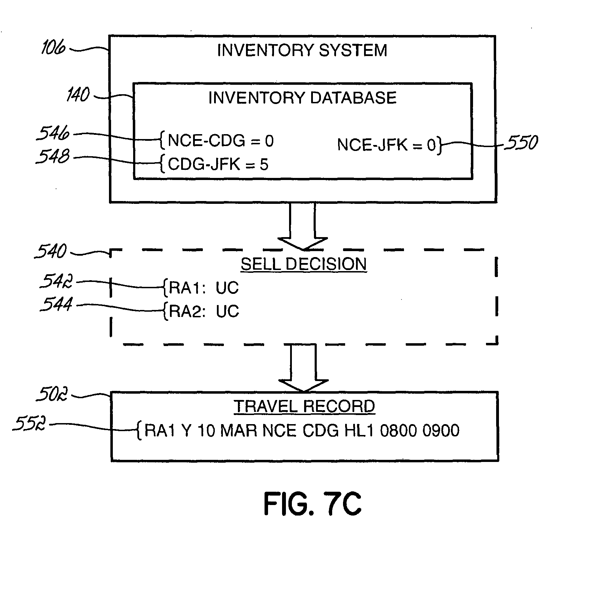

FIG. 7C illustrates an example sell decision 540 that indicates a computed updated availability 542 for the previously-booked segment RA1 506 and a computed availability 544 for the requested segment 506 of FIG. 7A. In this example, the inventory database 140 of the inventory system 106 may be queried to compute availability. As shown, the inventory database 140 indicates availability for the NCE-CDE segment 546 is zero, there are five travel inventory items available for the CDG-JFK segment 548, and the availability for the NCE-JFK journey 550 is zero. Therefore, in this example, as compared to the example of FIG. 7B, there is not availability for the NCE-JFK journey nor the NCE-CDG segment. Therefore, as shown in the sell decision, 540 the computed updated availability 542 for the previously-booked segment indicates that the booking status is denied (UC), and the computed availability 544 for the requested segment indicates that the booking status is denied (UC). As discussed previously with respect to the flowchart 400 of FIG. 6, the booking status of a candidate for re-evaluation segment may not be updated based on the updated availability if the booking status is not improved. In this example, the booking status for the previously-booked segment RA1 is waitlisted, while the updated availability 542 indicates a booking status of denied. Therefore, in this example, the booking status for the booking for segment RA1 552 is not updated in the travel record 502, i.e., the booking status remains waitlisted (HL1).

Therefore, as illustrated by the examples provided in FIGS. 7A-C, availability may be re-evaluated for a previously-booked segment of a travel record in response to receiving a transaction request for a requested segment, when the previously-booked segment and the requested segment correspond to a particular journey (i.e., the previously-booked segment and the requested segment are grouped in a particular journey). As illustrated by FIG. 7B, re-evaluating the availability of a previously-booked segment in the context of a journey may improve a booking status of the previously-booked segment. However, as provided by the example of FIG. 7C, when the updated availability does not indicate that the booking status of the previously-booked segment may be improved, embodiments of the invention may not update the booking status based on the updated availability thereby leaving the booking status unchanged for the previously-booked segment. Consistent with some embodiments of the invention, re-evaluating the booking status of a previously-booked segment in the context of a journey with a requested segment may allow a travel agent to maintain a booking status for the previously-booked segment unless the booking status may be improved based on the updated availability.

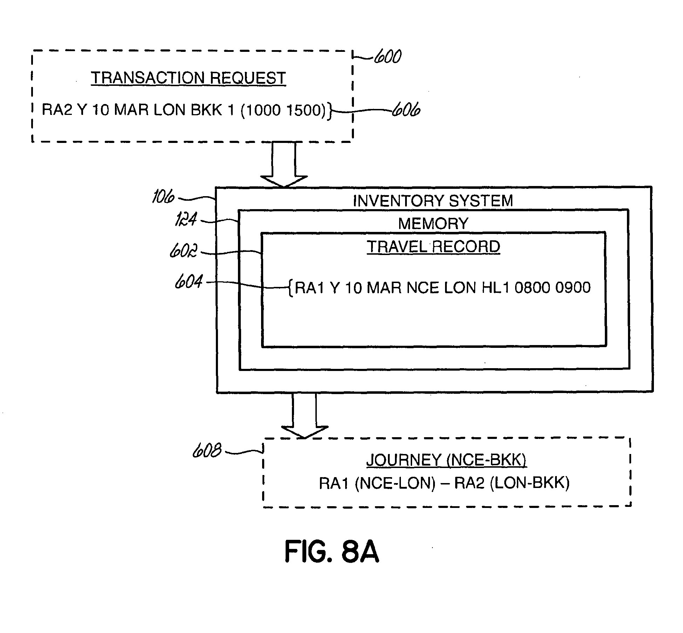

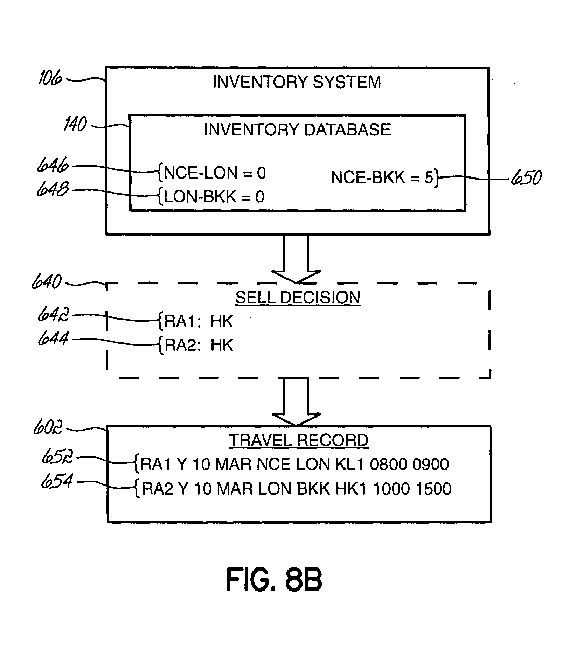

Turning now to FIGS. 8A and 8B, these figures provide diagrammatic illustrations directed to processing an example transaction request 600 for an example travel record 602 by an inventory system 106 consistent with embodiments of the invention. Referring to FIG. 8A, the travel record 602 for a passenger includes a booking for a previously-booked segment 604 ('RA1 10 MAR NCE LON HL1 0800 0900') where the previously-booked segment 604 (referred to for purposes of the example as 'RA1') is for a flight on March 10 from Nice, France (NCE) to London, United Kingdom (LON) and the booking status for the segment is waitlisted (HL). The example transaction request 600 includes a requested segment 606 ('RA2 Y 10 MAR LON BKK 1 (1000 1500)'), where the requested segment 606 (referred to for purposes of the example as 'RA2') is for a flight on March 10 from LON to Bangkok, Thailand (BKK). In this example, the inventory system 106 may group the previously-booked segment RA1 604 and the requested segment RA2 606 into a particular journey 608 based on the origin and destination of each segment 604, 606.

FIG. 8B illustrates an example sell decision 640 that indicates a booking status based on computed updated availability 642 for the previously-booked segment RA1 606 and a booking status based on computed availability 644 for the requested segment 606 of FIG. 8A. In this example, the inventory database 140 indicates that zero travel inventory items are available for a NCE-LON segment 646, zero travel inventory items are available for a LON-BKK segment, and 5 travel inventory items are available for a NCE-BKK journey 650. In some conventional systems, a conventional inventory system may not re-evaluate a booking status/compute an updated availability for previously-booked segments that correspond to a journey with a requested segment. For this example, a conventional inventory system may compute availability for the requested segment as indicating a booking status of denied (UC) or waitlisted (HL) because the LON-BKK segment availability 648 is zero. In other conventional systems, the computed availability may indicate a confirmed booking status (HK) for the requested segment may be confirmed, but the booking status of the previously booked segment may remain waitlisted (HL).

However, consistent with embodiments of the invention, an updated availability of the previously-booked segment and an availability for the requested segment may be computed in the context of the particular journey (i.e., the availability for the NCE-BKK journey 650). Therefore, as shown, the sell decision 640 indicates a confirmed booking status (HK) 642 for the previously-booked segment RA1 and a confirmed booking status (HK) 644 for the requested segment RA2. In this example, the inventory system 106 may update the travel record 602 by updating the booking status of the booking for the previously requested segment RA1 652 based on the updated availability 642 by changing the booking status of waitlisted (HL) to confirmed from waitlist (KL). In addition, the inventory system 106 may book the requested segment RA2 654 with a booking status of confirmed (HK). As discussed previously, in response to the confirmed booking of the previously booked segment RA1 and the requested segment RA2, the segments RA1, RA2 may be married as a booking fraud prevention measure.

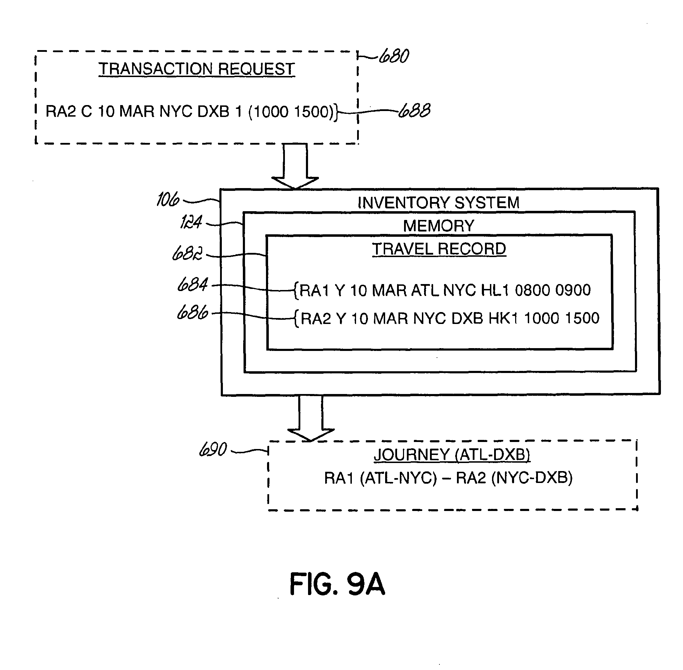

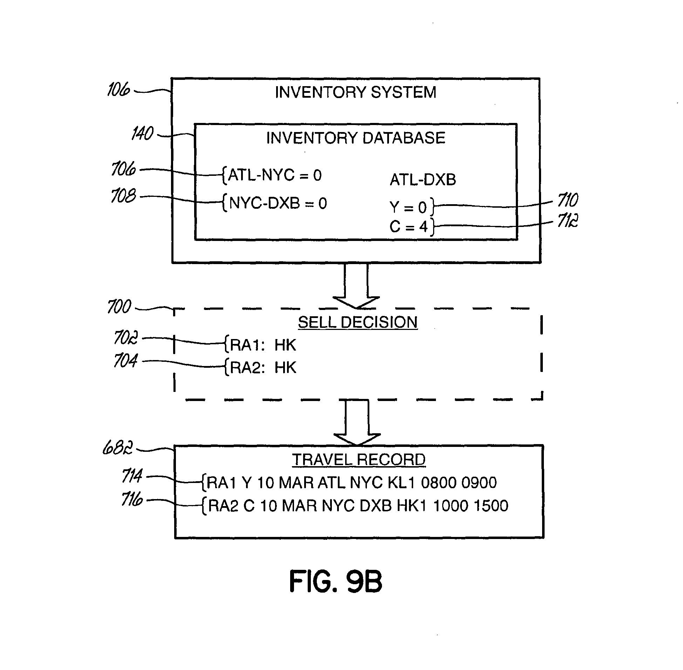

FIGS. 9A and 9B provide diagrammatic illustrations directed to processing an example transaction request 680 for an example travel record 682 by an inventory system 106 consistent with embodiments of the invention. In this example, the travel record 682 includes bookings for two previously-booked segments: a first previously-booked segment ('RA1 Y 10 MAR ATL NYC HL1 0800 0900') 684 that corresponds to a flight on March 10 from Atlanta (ATL) to New York (NYC) that has a waitlisted booking status (HL1) for booking class 'Y'; and a second previously-booked segment RA2 686 that corresponds to a flight on March 10 from NYC to Dubai, United Arab Emirates that has a confirmed booking (HK1) status for booking class 'Y'. In this example, the transaction request 680 is a rebook request that requests to book an updated booking class (i.e., booking class 'C') for the second segment RA2 ('RA2 C 10 MAR NYC DXB 1 (1000 1500)') 688. This type of transaction may also be referred to as a booking class update. The segments RA1, RA2 may be grouped into a journey (ATL-DXB) 690 based on the origin and destination of each segment RA1, RA2. Therefore, based on the requested segment and the journey 690, segment RA1 may be identified as a candidate for re-evaluation segment.

FIG. 9B illustrates an example sell decision 700 that indicates a booking status based on a computed updated availability 702 for the first previously-booked segment RA1 684 and a booking status based on a computed availability 704 for the requested updated booking status requested segment RA2 688 of FIG. 9A. In this example, the inventory database 140 indicates zero availability for an ATL-NYC segment 706 and a NYC-DXB segment 708. Furthermore, as shown, in this example, availability for an ATL-DXB journey is different between booking classes, where there is zero availability for booking class 'Y' 710 and four travel inventory items for booking class 'C' 712. In this example, because the previously-booked segment RA1 is grouped in a journey with a requested segment that has a booking class of 'C', the availability for the previously-booked segment RA1 may be re-evaluated in the context of the journey for booking class 'C'. Therefore, as shown, the sell decision 700 includes an updated booking status for the first previously-booked segment RA1 702 of confirmed (HK), and the sell decision 700 further includes the booking status for the request to change the booking class for the second previously-booked segment RA2 of 704 confirmed (HK). The inventory system 106 may update the travel record based at least in part on the updated availability for the first previously-booked segment RA1 702 and the availability for the requested segment booking class change 704. As shown, the booking status of RA1 segment 714 has been updated to confirmed from waitlist (KL) and the booking status of RA2 segment 716 has been updated to confirmed (HK) and the booking class has been updated to 'C'.

Therefore, consistent with embodiments of the invention, availability for or more previously-booked segments of a travel record may be re-evaluated concurrent with computing the availability of one or more requested segments of a transaction request for the travel record when the one or more previously-booked segments and the one or more requested segments correspond to a particular journey. As illustrated in the examples provides in FIGS. 7A-C, 8A-B, and 9A-B, re-evaluating availability for one or more previously-booked segments in the context of a journey may allow a booking status of each previously-booked segment to be improved. Furthermore, consistent with embodiments of the invention, a booking for a previously-booked segment is not updated unless the booking status may be improved. As described herein, embodiments of the invention may group one or more previously-booked segments of a travel record and/or one or more requested segments of a transaction request into one or more journeys based at least in part on the origin and destination of each segment. Any previously-booked segments that are grouped into a journey with at least one requested segment may be identified as a candidate for re-evaluation segment. Consistent with embodiments of the invention, an inventory system may compute an updated availability for each candidate for re-evaluation segment concurrent with computing availability for at least one requested segment grouped with the candidate for re-evaluation. Therefore, consistent with embodiments of the invention, an availability of travel inventory items corresponding to a particular journey may be used to re-evaluate the booking status for at least one previously-booked segment concurrent with booking at least one requested segment, when the at least one previously-booked segment and the at least one requested segment are grouped in a particular journey.

While the examples provided herein generally refer to a sell transaction request, embodiments of the invention are not so limited. For example, embodiments of the invention may be implemented to process cancellation and/or rebooking requests, such as the example rebooking request illustrated in FIGS. 9A-9C. For example, a transaction may cancel a booking for a particular segment that is grouped into a journey with a surviving booked segment, and the inventory may re-evaluate the availability of the surviving segment concurrent with processing the cancellation for the requested segment.

In general, the routines executed to implement the embodiments of the invention, whether implemented as part of an operating system or a specific application, component, program, object, module or sequence of instructions, or even a subset thereof, will be referred to herein as "computer program code," or simply "program code." Program code typically comprises one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of computer readable media used to actually carry out the distribution.

The program code embodied in any of the applications, modules, and/or components described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, RF, infrared and other wireless media. Combinations of any of the above may also be included within the scope of computer readable media.

These computer program instructions may also be stored in a computer readable medium that can direct a computer, other types of programmable data processing apparatus, or other devices to function in a particular manner, such that the instructions stored in the computer readable medium produce an article of manufacture including instructions that implement the function/act specified in the block or blocks of the flowchart and/or block diagram.

The computer program instructions may also be loaded onto a computer, other programmable data processing apparatus, or another device to cause a series of computations to be performed on the computer, the other processing apparatus, or the other device to produce a computer implemented process such that the executed instructions provide one or more processes for implementing the functions/acts specified in the flowchart and/or block diagram block or blocks.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the present invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. A method for processing a transaction request associated with a travel record including at least one previously-booked segment, the method comprising:
receiving, at an inventory system, the transaction request that identifies at least one requested segment for the travel record;
analyzing, with at least one processor of the inventory system, the at least one requested segment and the at least one previously-booked segment to identify at least one particular previously-booked segment of the travel record as at least one candidate for re-evaluation segment based at least in part on whether the at least one particular previously-booked segment and the at least one requested segment correspond to a particular journey;
computing, with the at least one processor, an availability for the at least one requested segment;
computing, with the at least one processor, an updated availability for the at least one candidate for re-evaluation segment; and
generating a sell decision for the transaction request based at least in part on the availability for the at least one requested segment and the updated availability for the at least one candidate for re-evaluation segment.

2. The method of claim 1, wherein analyzing, with the at least one processor of the inventory system, the at least one requested segment and the at least one previously-booked segment to identify the at least one particular previously-booked segment of the travel record as the at least one candidate for re-evaluation segment comprises:
grouping each requested segment of the at least one requested segment and each previously-booked segment of the at least one previously-booked segment of the travel record into the particular journey based at least in part on an origin and a destination associated with each of the at least one requested segment and at least in part on an origin and a destination associated with each of the at least one previously-booked segment.

3. The method of any of the preceding claims, wherein analyzing, with the at least one processor of the inventory system, the at least one requested segment and the at least one particular previously-booked segment to identify the at least one particular previously-booked segment of the travel record as the at least one candidate for re-evaluation segment is further based in part on a booking status of the at least one particular previously-booked segment.

4. The method of any of the preceding claims, further comprising:
updating the travel record based at least in part on the sell decision.

5. The method of claim 4, wherein updating the travel record based at least in part on the sell decision comprises:
determining whether to update a booking status of the at least one candidate for re-evaluation segment based at least in part on the updated availability.

6. The method of claim 5, wherein determining whether to update the booking status of the at least one candidate for re-evaluation segment based at least in part on the updated availability comprises:
comparing the booking status of the at least one candidate for re-evaluation segment to a booking status indicated by the updated availability.

7. The method of claim 6, further comprising:
updating the booking status of the at least one candidate for re-evaluation segment to the booking status indicated by the updated availability in response to the at least one candidate for re-evaluation segment having a waitlisted booking status and the booking status indicated by the updated availability being a confirmed booking status.

8. The method of any of the preceding claims, further comprising:
updating a booking status of the at least one candidate for re-evaluation segment in the travel record based at least in part on the updated availability.

9. The method of claim 8, wherein updating the booking status of the at least one candidate for re-evaluation segment in the travel record based at least in part on the updated availability comprises:
updating the booking status of the at least one candidate for re-evaluation segment from waitlisted to confirmed.

10. The method of any of the preceding claims, wherein the travel record comprises a passenger name record.

11. The method of any of the preceding claims, wherein the travel record includes a first previously booked segment and a second previously booked segment, the first previously booked segment and the second previously booked segment correspond to the particular journey, the transaction request is a booking class update request, the at least one requested segment corresponds to the first previously booked segment such that the second previously booked segment is identified as the at least one candidate for re-evaluation segment.

12. An apparatus comprising:
at least one processor; and
program code configured upon execution by the at least one processor to perform the method of any of claims 1-11.

13. A program product comprising:
a computer readable storage medium; and
program code stored on the computer readable storage medium and configured upon execution by at least one processor to perform the method of any of claims 1-11.

14. An apparatus comprising:
at least one processor; and
program code configured to be executed by the at least one processor to cause the at least one processor to receive a transaction request associated with a travel record that identifies at least one requested segment for the travel record, analyze the at least one requested segment and at least one previously-booked segment of the travel record to identify at least one particular previously-booked segment of the travel record as at least one candidate for re-evaluation segment based at least in part on whether the at least one particular previously-booked segment and the at least one requested segment correspond to a particular journey, compute an availability for the at least one requested segment, compute an updated availability for the at least one candidate for re-evaluation segment, and generate a sell decision for the transaction request based at least in part on the availability for the at least one requested segment and the updated availability for the at least one candidate for re-evaluation segment.

15. A computer program product, comprising:
a computer readable medium; and
program code stored on the computer readable medium and configured upon execution by at least one processor to cause the at least one processor to receive a transaction request associated with a travel record that identifies at least one requested segment for the travel record, analyze the at least one requested segment and at least one previously-booked segment of the travel record to identify at least one particular previously-booked segment of the travel record as at least one candidate for re-evaluation segment based at least in part on whether the at least one particular previously-booked segment and the at least one requested segment correspond to a particular journey, compute an availability for the at least one requested segment, compute an updated availability for the at least one candidate for re-evaluation segment, and generate a sell decision for the transaction request based at least in part on the availability for the at least one requested segment and the updated availability for the at least one candidate for re-evaluation segment.
